# DEMANDE DE BREVET EUROPEEN

(11) **EP 3 150 509 A1**
(43) Date de publication de la demande: **05.04.2017**
(21) Numéro de dépôt: 16190668.0
(22) Date de dépôt: 26.09.2016
(51) Int. Cl.: B65D 51/16, B29C 45/26, B29C 45/33, B65D 41/04

(54) **BOUCHON AVEC EVENTS**

(30) Priorité: 01.10.2015 FR 1559324
(71) Demandeur: United Caps France, 39570 Messia-sur-Sorne (FR)
(72) Inventeur: CHENEVAL-PALLUD, Rémi, 39000 LONS LE SAUNIER (FR)
(74) Mandataire: Novagraaf Technologies

(57) **Abrégé**

Un bouchon comporte une jupe (10) de forme tubulaire, des segments (12) de filets disposés à l'intérieur de la jupe (10) destinés à venir en prise avec une forme complémentaire du col 2 d'un flacon, les segments (12) étant interrompus pour définir des évents (13) creusés dans la paroi entre les segments (12). La paroi de la jupe (10) comporte un renflement (14) en regard des évents (13).

## Description

### Domaine technique

La présente invention se rapporte à un bouchon comportant des évents pour boucher un flacon tel qu'une bouteille de boisson gazeuse. Elle se rapporte également à un procédé de fabrication d'un tel bouchon.

### Etat de la technique

Un flacon tel qu'une bouteille peut être muni d'un col sur lequel est fixé par vissage un bouchon. Le terme de flacon désigne ici toute sorte de contenant, sans limitation de forme ni d'utilisation. Le bouchon comporte par exemple une jupe de forme tubulaire et un plateau relié à sa périphérie à la jupe et destiné à venir recouvrir l'ouverture du col. La jupe comporte un filet disposé à l'intérieur, destiné à venir en prise avec une forme complémentaire du col du flacon.

La jupe est fréquemment prolongée par une bande d'inviolabilité destinée à venir en prise avec une collerette du col. La bande d'inviolabilité est reliée à la jupe par des ponts entre lesquels s'étendent des séparations traversantes. Lors de l'ouverture du bouchon, la bande d'inviolabilité reste accrochée à la collerette et se détache de la jupe par la rupture des ponts. Ceci permet de montrer que le flacon a déjà été ouvert. Cependant, la rupture de la bande nécessite de fournir un couple de dévissage important.

Le bouchon est obtenu par moulage d'une matière thermoplastique. On trouve en général deux techniques de réalisation des bandes d'inviolabilité. La première technique consiste à reprendre le bouchon après son moulage en introduisant un poinçon à l'intérieur de la jupe et en faisant rouler cet ensemble contre une lame échancrée. La lame découpe les séparations tandis que les échancrures laissent subsister les ponts. La deuxième technique permet d'obtenir la bande d'inviolabilité directement par moulage. Pour cela, le moule comporte une première partie comportant une empreinte délimitant l'extérieur de la jupe et le plateau, un noyau délimitant l'intérieur de la jupe et les segments, au moins deux arcs mobiles radialement par rapport à l'axe du noyau pour délimiter l'extérieur de la bande d'inviolabilité et les séparations entre la jupe et la bande d'inviolabilité, tout en maintenant les ponts entre les séparations reliant la bande d'inviolabilité et la jupe.

Dans le cas de flacon destiné à recevoir une boisson gazeuse, à l'ouverture du flacon en dévissant le bouchon, du gaz tend à s'échapper avant même la séparation du bouchon et du col. Il est alors utile de prévoir un passage pour ce gaz afin de l'évacuer et pour que la pression soit faible au moment de la séparation.

Le document US 4,674,643 montre un tel bouchon. Le filet est subdivisé en segments interrompus pour faire un passage à des évents creusés dans la paroi entre les segments. Les évents permettent ainsi au gaz de s'échapper entre le col et la jupe.

Cependant, les évents, sous forme de rainures creusées dans la paroi de la jupe, sont limités en profondeur et en section, afin de ne pas affaiblir celle-ci.

Par ailleurs, le vissage des bouchons sur une chaîne d'embouteillage est réalisé par des machines. Le bouchon est placé dans un outil de forme creuse qui est entraîné en rotation et en translation pour visser le bouchon sur le flacon. La forme creuse est tronconique afin d'opérer un serrage sur le flanc de la jupe et d'entraîner ainsi le bouchon. Cette forme est normalisée et tout bouchon doit être en mesure d'être mis en place par l'outil de forme normalisée. Ceci conditionne le diamètre extérieur de la jupe.

Un autre point sur lequel il est important de veiller avec ce genre de bouchon est la facilité avec laquelle le bouchon peut être dévissé. Il est fréquent de prévoir des striures sur la surface extérieure de la jupe, mais celles-ci s'avèrent souvent insuffisantes. De plus, et plus particulièrement lorsque le bouchon comporte des évents, le serrage exercé manuellement sur la jupe pour l'agripper est transmis entre la jupe et le col, ce qui augmente encore le couple nécessaire pour le desserrage.

### Description de l'invention

L'invention vise à fournir un bouchon apte à fermer un flacon de boisson gazeuse, qui permette un dégazage facile lors de l'ouverture, qui soit léger tout en étant résistant, adapté aux outils de vissage normalisés et facile à dévisser.

Avec ces objectifs en vue, l'invention a pour objet un bouchon comportant une jupe de forme tubulaire, des segments de filets disposés à l'intérieur de la jupe destinés à venir en prise avec une forme complémentaire du col d'un flacon, les segments étant interrompus pour définir des évents creusés dans la paroi entre les segments, caractérisé en ce que la paroi de la jupe comporte un renflement en regard des évents.

Grâce à l'invention, le bouchon comporte des évents pour laisser s'échapper le gaz sous pression lors de l'ouverture du flacon qu'il fermait, ceci sans nécessiter de limitation par rapport à l'épaisseur de la paroi de la jupe, puisque le renflement permet de maintenir l'épaisseur de la paroi de la jupe sensiblement constante. De plus, les renflements créent des reliefs significatifs sur l'extérieur de la jupe, ce qui permet un meilleur agrippement manuel du bouchon, de manière à faciliter son dévissage. Du fait de ce meilleur agrippement, il n'est pas nécessaire d'exercer un fort serrage, ce qui diminue le serrage exercé entre la jupe et le col et diminue encore le couple nécessaire au dévissage. En outre, la forme ondulée de la jupe autorise une flexion de la jupe entre les ondulations, ce qui diminue la force transmise en serrage sur le col.

Selon un perfectionnement, la jupe est prolongée par une bande d'inviolabilité destinée à venir en prise avec une collerette du col, la bande d'inviolabilité étant reliée à la jupe par des ponts entre lesquels s'étendent des séparations traversantes pour détacher la bande d'inviolabilité de la jupe par rupture des ponts, les évents et les renflements se prolongeant sur la bande d'inviolabilité. L'invention est également applicable à un bouchon comportant une bande d'inviolabilité. Le prolongement des évents sur la bande d'inviolabilité permet le démoulage de l'intérieur du bouchon par un noyau traditionnel, comme on le verra mieux par la suite.

Selon un perfectionnement, la bande d'inviolabilité comporte au moins une nervure de renfort s'étendant circonférentiellement sur l'extérieur. Ces nervures rigidifient la bande d'inviolabilité et lui permettent ainsi de rester accrochée à la collerette sans se déformer lors de la traction exercée sur elle à l'ouverture.

Selon une caractéristique encore plus particulière, la nervure de renfort a une section plus forte à proximité des renflements qu'entre les renflements. Cette nervure renforcée permet de limiter en particulier l'expansion en diamètre de la bande d'inviolabilité qui pourrait dégager la bande de la collerette.

Selon une disposition particulière, la bande d'inviolabilité comporte des ergots faisant saillie vers l'intérieur pour venir en prise avec la collerette.

L'invention a aussi pour objet un procédé de moulage d'un bouchon tel que décrit précédemment, selon lequel on utilise un moule comportant une première partie comportant une empreinte délimitant l'extérieur de la jupe, un noyau délimitant l'intérieur de la jupe et les segments, caractérisé en ce que le noyau comporte des côtes s'étendant selon une direction axiale pour former les évents.

Le noyau comportant des côtes dans la direction axiale, il reste possible de démouler facilement le bouchon, sans mesure particulière.

Selon un perfectionnement, on utilise au moins deux arcs mobiles radialement par rapport à l'axe du noyau pour délimiter l'extérieur de la bande d'inviolabilité et les séparations entre la jupe et la bande d'inviolabilité, tout en maintenant les ponts entre les séparations reliant la bande d'inviolabilité et la jupe. Il est ainsi simple d'obtenir la bande d'inviolabilité qu'il serait difficile d'obtenir avec le procédé de roulage contre une lame échancrée. En effet, la périphérie de la jupe n'est plus circulaire et le bouchon ne peut pas rouler le long de la lame.

Selon un perfectionnement, les arcs délimitent en outre au moins une nervure de renfort s'étendant circonférentiellement sur l'extérieur de la bande d'inviolabilité. Il est facile de prévoir ces nervures avec cette technique de moulage.

Selon un autre perfectionnement, le noyau comporte un coeur autour duquel s'étend une première couronne montée coulissante selon l'axe du noyau, le coeur prenant appui sur un plateau du bouchon fermant la jupe pour obtenir le démoulage de la première couronne hors de l'intérieur de la jupe. Ce type de noyau est simple à réaliser et à mettre en oeuvre dans un procédé de moulage. Après avoir retiré les arcs et la partiecomportant une empreinte délimitant l'extérieur de la jupe , on utilise l'élasticité de la pièce juste moulée pour obtenir son retrait hors de la couronne. Ce retrait est facilité par la continuité des évents jusque sur la bande d'inviolabilité.

Selon un autre perfectionnement, on appuie en outre sur la périphérie de la bande d'inviolabilité simultanément à l'appui du coeur sur le plateau, pour le démoulage. On répartit mieux ainsi les efforts pour dégager la jupe de la première couronne.

Selon un autre mode de réalisation, la cavité délimite en outre la bande d'inviolabilité, et on réalise une séparation entre la jupe et la bande d'inviolabilité après le démoulage en introduisant le bouchon sur un poinçon et en le roulant contre une lame qui laisse subsister les ponts.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue de côté d'un bouchon conforme à un premier mode de réalisation de l'invention ;
- les figures 2 et 3 sont des vues respectivement de dessus et de dessous du bouchon de la figure 1 ;
- les figures 4 et 5 sont des vues en coupe selon la ligne IV-IV de la figure 2, respectivement seul et monté sur un col ;
- les figures 6 et 7 sont des vues en coupe selon la ligne VI-VI de la figure 2, respectivement seul et monté sur un col ;
- la figure 8 est une vue en coupe d'une étape de moulage du bouchon de la figure 1 ;
- la figure 9 est une vue similaire à la figure 1 d'un bouchon selon un deuxième mode de réalisation de l'invention.

### DESCRIPTION DETAILLEE

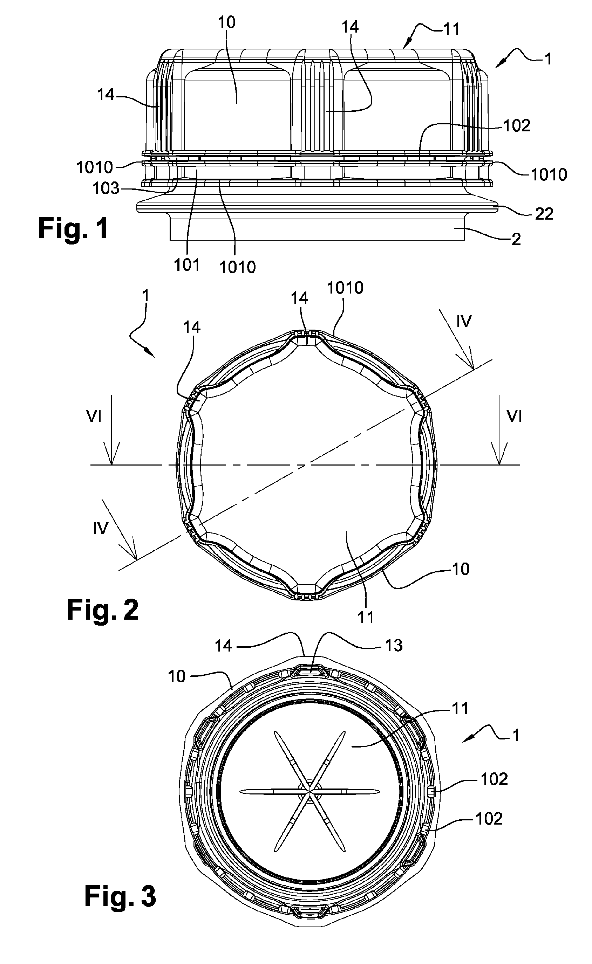

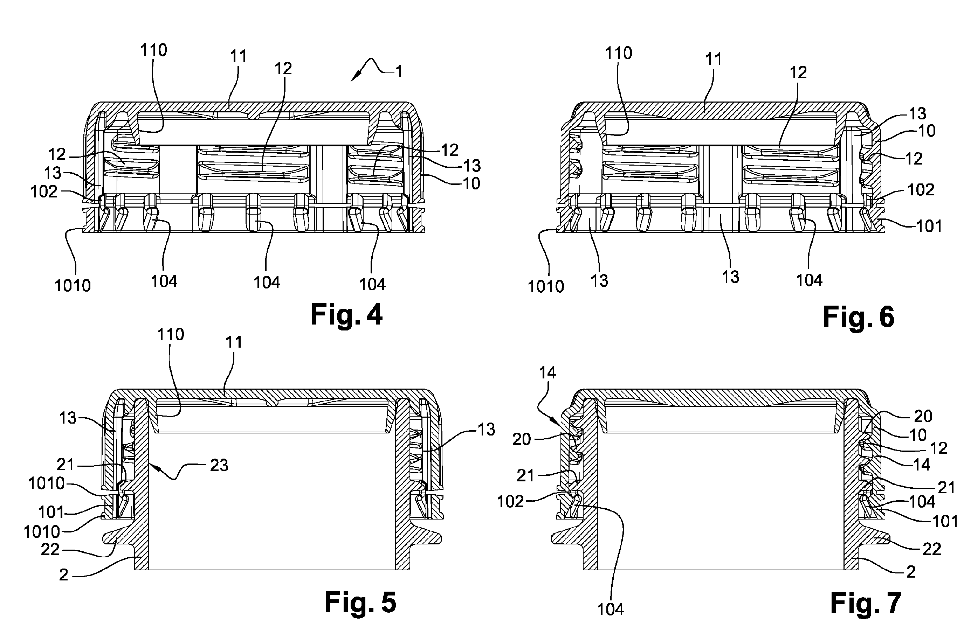

Un bouchon 1 conforme à un premier mode de réalisation de l'invention est destiné à être vissé sur le col 2 d'un flacon, dont seule l'extrémité est représentée sur les figures 1, 5 et 7. Le bouchon 1 comporte une jupe 10 de forme tubulaire et un plateau 11 de forme sensiblement plane raccordé par sa périphérie à une extrémité de la jupe 10. Le col 2 est de forme générale tubulaire et comporte des moyens de vissage 20 sur sa surface extérieure, suivis de deux collerettes 21, 22. Les moyens de vissage 20 peuvent être un filet hélicoïdal continu, mais en l'occurrence, le filet est interrompu et forme des segments. Le plateau 11 comporte un anneau 110 d'étanchéité venant réaliser une étanchéité contre la surface intérieure 23 de la partie tubulaire du col 2.

Le bouchon 1 comporte en outre des segments 12 de filets disposés à l'intérieur de la jupe 10 destinés à venir en prise avec les moyens de vissage du col 2. Les segments 12 sont interrompus pour définir des évents 13 creusés dans la paroi 10 entre les segments 12. La jupe 10 est prolongée par une bande d'inviolabilité 101 en prise avec l'une des collerettes 21 du col 2 par des ergots 104 faisant saillie vers l'intérieur. La bande d'inviolabilité 101 est reliée à la jupe 10 par des ponts 102 entre lesquels s'étendent des séparations traversantes 103, pour détacher la bande d'inviolabilité 101 de la jupe 10 par rupture des ponts 102 lors du dévissage du bouchon 1. La bande d'inviolabilité 101 comporte en outre deux nervures 1010 de renfort s'étendant circonférentiellement sur l'extérieur.

La paroi de la jupe 10 comporte un renflement 14 en regard des évents 13, afin de garder une épaisseur de paroi sensiblement constante, les évents 13 et les renflements 14 se prolongeant sur la bande d'inviolabilité 101. Les nervures 1010 de renfort ont une section plus forte à proximité des renflements 14 qu'entre les renflements 14.

Un tel bouchon 1 est mis en place sur le flacon en étant par exemple introduit dans une empreinte conique d'un outil tournant, non représenté. Le bouchon 1 est maintenu dans l'empreinte par un léger coincement au niveau de la périphérie du plateau 11 et du raccordement avec la jupe 10 ou par d'autres moyens. Le vissage met en prise les segments 12 à l'intérieur de la jupe 10 par ceux sur le col 2 jusqu'à ce que, d'une part, les ergots 104 de la bande d'inviolabilité 101 s'encliquètent sur la collerette 21, et d'autre part jusqu'à ce que le col 2 soit en appui contre le plateau 11. Au dévissage par l'utilisateur, les ergots 104 en prise avec la collerette 21 retiennent la bande d'inviolabilité 101 jusqu'à ce que les ponts 102 se rompent et que la bande d'inviolabilité 101 se détache du reste du bouchon 1. Le gaz contenu s'échappe progressivement par l'espace qui ruine l'étanchéité entre l'anneau 110 et le col 2, puis par les évents 13.

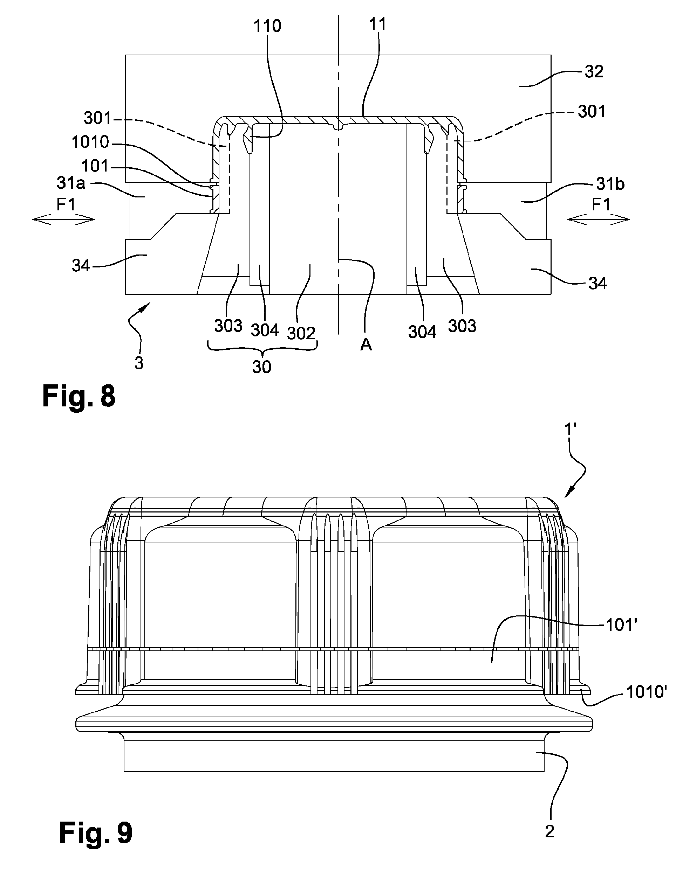

Pour la fabrication d'un tel bouchon 1, on utilise un procédé de moulage avec un moule 3 comportant une première partie 32 comportant une empreinte délimitant l'extérieur de la jupe 10 et du plateau 11, un noyau 30 délimitant l'intérieur de la jupe 10, les segments 12, l'anneau 110 et l'intérieur du plateau 11 et un support 34 sur lequel la périphérie de la bande d'inviolabilté 101 prend appui lors de l'éjection. On utilise en outre au moins deux arcs 31 a, 31 b mobiles radialement par rapport à l'axe du noyau dans la direction des flèches F1, pour délimiter l'extérieur de la bande d'inviolabilité 101 et les séparations 103 entre la jupe 10 et la bande d'inviolabilité 101, tout en maintenant les ponts 102 entre les séparations, comme le montre en particulier la figure 8. Les arcs 31 a, 31 b délimitent en outre les nervures 1010 de renfort s'étendant circonférentiellement sur l'extérieur de la bande d'inviolabilité 101.

Le noyau 30 comporte des côtes 301 s'étendant selon une direction axiale pour former les évents 13. Le noyau 30 est formé d'un coeur 302 autour duquel s'étend une première couronne 303 montée coulissante selon l'axe du noyau A et portant les côtes, une deuxième couronne 304 étant interposée entre le coeur 302 et la première couronne 303. La première et la deuxième couronne 303, 304 délimitent entre elles l'anneau 110 d'étanchéité.

Après l'opération d'injection et durcissement de la matière du bouchon 1, par exemple par refroidissement, on procède d'abord au retrait de la partie 32 du moule 3 par coulissement selon l'axe du noyau A, puis des arcs 31 a, 31 b par écartement de ceux-ci dans la direction F1. Ensuite, on retire la deuxième couronne 304 par coulissement selon l'axe du noyau A et on procède enfin au démoulage de la première couronne 303 hors de l'intérieur de la jupe 10 en agissant par coulissement simultané du coeur 302 pour qu'il prenne appui sur le plateau 11 du bouchon 1 et du support 34 pour qu'il prenne appui sous la périphérie de la bande 101. Cette dernière opération est facilitée par le fait que les évents 13 s'étendent sur toute la hauteur de la jupe 10, y compris celle de la bande d'inviolabilité 101.

La figure 9 montre un deuxième mode de réalisation du bouchon 1' de l'invention. Il se distingue du premier mode de réalisation en ce que la bande d'inviolabilité 101' comporte une seule nervure 1010' et qu'elle ne dépasse pas le cylindre enveloppe des renflements. Elle se distingue également par son procédé de fabrication selon lequel la séparation entre la jupe 10 et la bande d'inviolabilité 101' est obtenue après le moulage. On reprend le bouchon 1' après son moulage en introduisant un poinçon, non représenté, à l'intérieur de la jupe 10 et en faisant rouler cet ensemble contre une lame échancrée, non représentée. La lame découpe les séparations tandis que les échancrures laissent subsister les ponts.

## Revendications

1. Bouchon comportant une jupe (10) de forme tubulaire, des segments (12) de filets disposés à l'intérieur de la jupe (10) destinés à venir en prise avec une forme complémentaire du col (2) d'un flacon, les segments (12) étant interrompus pour définir des évents (13) creusés dans la paroi entre les segments (12), **caractérisé en ce que** la paroi de la jupe (10) comporte un renflement (14) en regard des évents (13).

2. Bouchon selon la revendication 1, dans lequel la jupe (10) est prolongée par une bande d'inviolabilité (101) destinée à venir en prise avec une collerette (21) du col (2), la bande d'inviolabilité (101) étant reliée à la jupe (10) par des ponts (102) entre lesquels s'étendent des séparations traversantes (103) pour détacher la bande d'inviolabilité (101) de la jupe (10) par rupture des ponts (102), les évents (13) et les renflements (14) se prolongeant sur la bande d'inviolabilité (101).

3. Bouchon selon la revendication 2, dans lequel la bande d'inviolabilité (101) comporte au moins une nervure (1010) de renfort s'étendant circonférentiellement sur l'extérieur.

4. Bouchon selon la revendication 3, dans lequel la nervure (1010) de renfort a une section plus forte à proximité des renflements (14) qu'entre les renflements (14).

5. Bouchon selon l'une des revendications précédentes, dans lequel la bande d'inviolabilité (101) comporte des ergots (104) faisant saillie vers l'intérieur pour venir en prise avec la collerette (21).

6. Procédé de moulage d'un bouchon (1) selon l'une des revendications précédentes, selon lequel on utilise un moule comportant une première partie (32) comportant une empreinte délimitant l'extérieur de la jupe (10), un noyau (30) délimitant l'intérieur de la jupe (10) et les segments (12), **caractérisé en ce que** le noyau (30) comporte des côtes (301) s'étendant selon une direction axiale pour former les évents (13).

7. Procédé selon la revendication 6, selon lequel on utilise au moins deux arcs (31 a, 31 b) mobiles radialement par rapport à l'axe du noyau (A) pour délimiter l'extérieur de la bande d'inviolabilité (101) et les séparations entre la jupe (10) et la bande d'inviolabilité (101), tout en maintenant les ponts (102) entre les séparations reliant la bande d'inviolabilité (101) et la jupe (10),

8. Procédé selon la revendication 6, selon lequel les arcs (31 a, 31 b) délimitent en outre au moins une nervure (1010) de renfort s'étendant circonférentiellement sur l'extérieur de la bande d'inviolabilité (101).

9. Procédé selon la revendication 8, selon lequel le noyau (30) comporte un coeur (302) autour duquel s'étend une première couronne (303) montée coulissante selon l'axe du noyau (A), le coeur (302) prenant appui sur un plateau (11) du bouchon (1) fermant la jupe (10) pour obtenir le démoulage de la couronne (303) hors de l'intérieur de la jupe (10).

10. Procédé selon la revendication 9, selon lequel on appuie en outre sur la périphérie de la bande d'inviolabilité (101) simultanément à l'appui du coeur (302) sur le plateau (11), pour le démoulage.

11. Procédé selon la revendication 6, selon lequel la cavité (32) délimite en outre la bande d'inviolabilité (101'), et on réalise une séparation entre la jupe (10) et la bande d'inviolabilité (101') après le démoulage en introduisant le bouchon (1') sur un poinçon et en roulant l'ensemble contre une lame qui laisse subsister les ponts.
